# EUROPÄISCHE PATENTSCHRIFT

(11) **EP 3 347 783 B1**
(45) Veröffentlichungstag und Bekanntmachung des Hinweises auf die Patenterteilung: **26.01.2022**
(21) Anmeldenummer: 16741284.0
(22) Anmeldetag: 15.07.2016
(51) Int. Cl.: G05D 1/00

(54) **VERFAHREN UND VORRICHTUNG ZUR FÜHRERLOSEN FÜHRUNG EINES AN EINER STARTPOSITION EINES PARKPLATZES ABGESTELLTEN KRAFTFAHRZEUGS**
METHOD AND DEVICE FOR DRIVERLESSLY GUIDING A MOTOR VEHICLE PARKED AT A STARTING POSITION OF A PARKING SPACE
PROCÉDÉ ET DISPOSITIF DE GUIDAGE SANS CONDUCTEUR D'UN VÉHICULE AUTOMOBILE GARÉ À UNE POSITION DE DÉPART D'UN PARC DE STATIONNEMENT

(30) Priorität: 10.09.2015 DE 102015217278
(43) Veröffentlichungstag der Anmeldung: 18.07.2018
(73) Patentinhaber: Robert Bosch GmbH, 70442 Stuttgart (DE)
(72) Erfinder: NORDBRUCH, Stefan, 70806 Kornwestheim (DE); NICODEMUS, Rolf, 74321 Bietigheim-Bissingen (DE); HOFFMANN, Stefan, 74321 Bietigheim (DE); AURACHER, Juergen, 71720 Oberstenfeld (DE)
(86) Internationale Anmeldenummer: PCT/EP2016/066855
(87) Internationale Veröffentlichungsnummer: WO 2017/041937

(56) Entgegenhaltungen:
- EP-A2- 2 876 025
- DE-A1-102013 213 379
- GB-A- 2 432 922
- US-A1- 2010 156 672

## Beschreibung

Die Erfindung betrifft ein Verfahren und eine Vorrichtung zum führerlosen Führen eines an einer Startposition eines Parkplatzes abgestellten Kraftfahrzeugs. die Erfindung betrifft des Weiteren ein Computerprogramm.

### Stand der Technik

Die Offenlegungsschrift DE 10 2012 222 562 A1 zeigt ein System für bewirtschaftete Parkflächen zur Überführung eines Fahrzeugs von einer Startposition in eine Zielposition.

Die Offenlegungsschrift EP 2 876 025 A2 offenbart ein Konzept zum autonomen Parken eines Kraftfahrzeugs.

Die Offenlegungsschrift US 2010/156672 A1 offenbart ein Konzept zum autonomen Parken eines Kraftfahrzeugs.

Die Offenlegungsschrift DE 10 2013 213 379 A1 offenbart eine Vorrichtung und ein Verfahren zur Unterstützung eines Fahrers beim Ein- und Ausparken seines Fahrzeugs in einer Parkeinrichtung.

Die Offenlegungsschrift GB 2 432 922 A offenbart ein System und ein Verfahren zum autonomen Steuern eines Kraftfahrzeugs.

### Offenbarung der Erfindung

Die der Erfindung zugrunde liegende Aufgabe ist darin zu sehen, ein effizientes Konzept zum effizienten führerlosen Führen eines an einer Startposition eines Parkplatzes abgestellten Kraftfahrzeugs von der Startposition zu einer Zielposition des Parkplatzes bereitzustellen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren zum führerlosen Führen eines an einer Startposition eines Parkplatzes abgestellten Kraftfahrzeugs von der Startposition zu einer Zielposition des Parkplatzes bereitgestellt, umfassend die folgenden Schritte:
- Prüfen, ob eine oder mehrere der folgenden Mindestbedingungen erfüllt sind:
   - Auftrag für das führerlose Führen liegt vor,
   - Verantwortung für das abgestellte Kraftfahrzeug ist vom Fahrer des abgestellten Kraftfahrzeugs abgegeben,
   - Mindestabstand von einer oder mehrerer Personen zum abgestellten Kraftfahrzeug ist eingehalten,
- Beginnen mit dem führerlosen Führen des Kraftfahrzeugs nur dann, wenn eine oder mehrere der Mindestbedingungen erfüllt sind.

Nach einem weiteren Aspekt wird eine Vorrichtung zum führerlosen Führen eines an einer Startposition eines Parkplatzes abgestellten Kraftfahrzeugs von der Startposition zu einer Zielposition des Parkplatzes bereitgestellt, wobei die Vorrichtung ausgebildet ist, das Verfahren zum führerlosen Führen eines an einer Startposition eines Parkplatzes abgestellten Kraftfahrzeugs von der Startposition zu einer Zielposition des Parkplatzes durchzuführen.

Nach einem anderen Aspekt wird ein Computerprogramm bereitgestellt, welches Programmcode zur Durchführung des Verfahrens zum führerlosen Führen eines an einer Startposition eines Parkplatzes abgestellten Kraftfahrzeugs von der Startposition zu einer Zielposition des Parkplatzes umfasst, wenn das Computerprogramm auf einem Computer ausgeführt wird.

Die Erfindung umfasst also insbesondere und unter anderem den Gedanken, mit dem führerlosen Führen des Kraftfahrzeugs von der Start- zur Zielposition erst dann zu beginnen, wenn eine oder mehrere der Mindestbedingungen erfüllt sind. Die Mindestbedingungen stellen sicher, dass das abgestellte Kraftfahrzeug auch wirklich für das führerlose Führen bestimmt oder vorgesehen ist. Dadurch wird insbesondere der technische Vorteil bewirkt, dass das Kraftfahrzeug effizient von der Start- zur Zielposition führerlos geführt werden kann. Insbesondere wird der technische Vorteil bewirkt, dass eine Sicherheit für umstehende Personen erhöht werden kann. Es wird somit in vorteilhafter Weise ein Kollisionsrisiko für diese Personen verringert oder sogar ausgeschlossen.

Durch das Prüfen der Mindestbedingung, ob der Auftrag für das führerlose Führen vorliegt, kann also insbesondere in vorteilhafter Weise sichergestellt werden, dass genau dieses Kraftfahrzeug nun von seiner Startposition zur Zielposition führerlos geführt werden soll. Verwechslungen mit anderen Kraftfahrzeugen, die sich in der Nähe der Startposition befinden, können somit in vorteilhafter Weise vermieden werden.

Das Prüfen, ob die Verantwortung für das abgestellte Kraftfahrzeug vom Fahrer des abgestellten Kraftfahrzeugs abgegeben wurde, weist insbesondere den technischen Vorteil auf, dass sichergestellt werden kann, dass das abgestellte Kraftfahrzeug nun nicht mehr unter der Führung seines Fahrers ist, sondern vielmehr bereit ist, selbst die Führung zu übernehmen respektive ferngesteuert geführt zu werden.

Die Verantwortung kann zum Beispiel wie folgt übertragen werden:
Der Fahrer will einen automatischen Parkvorgang (AVP: automated valet parking, siehe auch nachstehende Ausführungen) aktivieren, zum Beispiel mittels einer Smartphone App. Der Fahrer führt also die App auf seinem Smartphone aus, um den automatischen Parkvorgang zu starten oder zu aktivieren. Die App, die beispielsweise über ein Parkplatzverwaltungssystem gesteuert wird, zeigt zum Beispiel die AGBs (Allgemeine Geschäftsbedingungen) für das AVP. In den AGBs sind zum Beispiel Bezahlmethodik, Produkthaftung, usw. geregelt. Aber insbesondere auch die Kriterien.

Der Fahrer wird von der App aufgefordert diese zu akzeptieren. Sofern der Fahrer die AGBs akzeptiert, geht nach einer Ausführungsform dann die Verantwortung über auf das Kraftfahrzeug respektive das Parkplatzverwaltungssystem.

Das heißt, dass nach einer Ausführungsform das Prüfen, ob die Verantwortung für das abgestellte Kraftfahrzeug vom Fahrer des abgestellten Kraftfahrzeugs abgegeben wurde, ein Prüfen umfasst, ob der Fahrer AGBs für den automatischen Parkvorgang akzeptiert hat.

Nach einer Ausführungsform umfasst das Prüfen, ob die Verantwortung für das abgestellte Kraftfahrzeug vom Fahrer des abgestellten Kraftfahrzeugs abgegeben wurde, ein Prüfen umfasst, ob der Fahrer einen Start oder einen Beginn des führerlosen Führens angefordert hat.

Das Prüfen, ob der Mindestabstand eingehalten ist, bevor mit dem führerlosen Führen begonnen wird, weist insbesondere den technischen Vorteil auf, dass ein Kollisionsrisiko für die umstehenden Personen verringert werden kann. Der Mindestabstand beträgt zum Beispiel 2 m.

Ein führerloses Führen umfasst insbesondere, dass das Fahrzeug autonom, also selbstständig von der Startposition zur Zielposition fährt. Ein führerloses Führen umfasst insbesondere, dass das Kraftfahrzeug ferngesteuert von der Startposition zur Zielposition geführt wird. Ein führerloses Führen umfasst insbesondere, dass das Kraftfahrzeug eine Teilstrecke von der Startposition zur Zielposition autonom fährt und eine weitere Teilstrecke von der Start- zur Zielposition ferngesteuert wird.

Das heißt also, dass bei einem führerlosen Führen des Kraftfahrzeugs sich kein Fahrer oder menschliche Person mehr im Fahrzeug zwecks Führung des Fahrzeugs befinden muss. Das Fahrzeug fährt also ohne einen manuellen Eingriff eines sich innerhalb des Fahrzeugs befindenden Fahrers. Dies also insbesondere dadurch, dass das Kraftfahrzeug selbstständig, also autonom, fährt oder ferngesteuert wird.

Ein Parkplatz im Sinne der vorliegenden Erfindung bildet eine Abstellfläche für Kraftfahrzeuge. Der Parkplatz bildet somit insbesondere eine zusammenhängende Fläche, die aus mehreren Stellplätzen (bei einem Parkplatz auf privatem Grund) oder Parkständen (bei einem Parkplatz auf öffentlichem Grund) gebildet ist. Die Stellplätze oder Parkstände sind also Parkpositionen des Parkplatzes, auf welchen Kraftfahrzeuge parken können.

Die Startposition befindet sich also insbesondere innerhalb des Parkplatzes. Die Zielposition befindet sich somit insbesondere innerhalb des Parkplatzes. Das heißt also, dass das Kraftfahrzeug innerhalb des Parkplatzes führerlos geführt werden soll respektive geführt wird.

Das führerlose Führen ist nach einer Ausführungsform von einem automatischen Parkvorgang umfasst. Ein solcher automatischer Parkvorgang kann zum Beispiel als ein AVP-Vorgang bezeichnet. Hierbei steht "AVP" für "automated valet parking" und kann mit "automatischer Parkvorgang" übersetzt werden. Bei einem AVP-Vorgang wird das Fahrzeug automatisch innerhalb des Parkplatzes geparkt und wird automatisch nach Ende einer Parkdauer zu einer Position innerhalb oder außerhalb des Parkplatzes geführt, an welcher eine Person das Fahrzeug wieder übernehmen kann. Im Rahmen des automatischen Parkvorgangs ist vorgesehen, dass sich kein Fahrer mehr im Fahrzeug selbst befinden muss. Das Fahrzeug fährt im Rahmen eines automatischen Parkvorgangs autonom respektive wird ferngesteuert.

Fahrzeuge im Sinne der vorliegenden Erfindung sind Kraftfahrzeuge.

Erfindungsgemäß ist vorgesehen, dass wenn eine oder mehrere der Mindestbedingungen erfüllt sind, eine Zeit nach einem Ende des Prüfens gemessen wird, die mit einer vorbestimmten Mindestzeit verglichen wird, wobei mit dem führerlosen Führen des Kraftfahrzeugs nur dann begonnen wird, wenn die gemessene Zeit gleich oder größer gleich der vorbestimmten Mindestzeit ist. Dadurch wird insbesondere der technische Vorteil bewirkt, dass sichergestellt werden kann, dass eine vorbestimmte Mindestzeit, zum Beispiel mindestens 10 s, vergangen sein muss, bevor mit dem führerlosen Führen des Kraftfahrzeugs begonnen wird. Dadurch kann in vorteilhafter Weise eine Sicherheit für umstehende Personen weiter erhöht werden. Insbesondere kann dadurch der technische Vorteil bewirkt werden, dass in dem Fall, in welchem der Fahrer nach einem Verlassen des Kraftfahrzeugs unmittelbar zurück zum Kraftfahrzeug geht, beispielsweise weil er etwas vergessen hat, eine Sicherheit für den Fahrer erhöht wird, da das führerlose Führen aufgrund der noch nicht abgelaufenen Mindestzeit noch nicht gestartet wurde.

Erfindungsgemäß ist vorgesehen, dass nach Ablauf der vorbestimmten Mindestzeit eine oder mehrere, vorzugsweise sämtliche, der Mindestbedingungen überprüft werden, ob diese erfüllt sind, wobei nur bei Erfüllung mit dem führerlosen Führen begonnen wird. Überprüfen bedeutet hier, dass noch einmal geprüft wird. Es findet also eine erneute Prüfung statt, ob die Mindestbedingung(en) erfüllt sind.

Dadurch wird insbesondere der technische Vorteil bewirkt, dass eine Sicherheit noch weiter erhöht werden kann.

Nach einer anderen Ausführungsform ist vorgesehen, dass geprüft wird, ob ein oder mehrere Systeme zur Durchführung des führerlosen Führens einen betriebsbereiten Betriebszustand melden, wobei mit dem führerlosen Führen des Kraftfahrzeugs nur dann begonnen wird, wenn das eine oder die mehreren Systeme einen betriebsbereiten Betriebszustand melden.

Dadurch wird insbesondere der technische Vorteil bewirkt, dass effizient sichergestellt werden kann, dass das Kraftfahrzeug respektive eine Infrastruktur des Parkplatzes, die zur Durchführung des führerlosen Führens benötigt wird, bereit sind, das Kraftfahrzeug führerlos zu führen. Das heißt also, sofern eines der Systeme noch keinen betriebsbereiten Betriebszustand meldet, nicht mit dem führerlosen Führen begonnen wird.

In einer Ausführungsform ist vorgesehen, dass das eine oder die mehreren Systeme ein oder mehrere Elemente ausgewählt aus der folgende Gruppe von Systemen umfassen: Antriebssystem des Kraftfahrzeugs, Bremssystem des Kraftfahrzeugs, Lenkungssystem des Kraftfahrzeugs, Kommunikationssystem des Kraftfahrzeugs, Umfeldsensorsystem des Kraftfahrzeugs, Parkassistenzsystem des Kraftfahrzeugs, autonomes Führungssystem des Kraftfahrzeugs, Kommunikationssystem des Parkplatzes, Umfeldsensorsystem des Parkplatzes, Steuerungssystem des Parkplatzes zum Steuern des führerlosen Führens, Fernsteuerungssystem des Parkplatzes zum Fernsteuern des Kraftfahrzeugs.

Somit wird zum Beispiel sichergestellt, dass das Umfeldsensorsystem des Kraftfahrzeugs ordnungsgemäß funktioniert. Denn in der Regel braucht das Kraftfahrzeug sein Umfeldsensorsystem, um autonom innerhalb des Parkplatzes navigieren zu können. Insbesondere braucht das Kraftfahrzeug sein Umfeldsensorsystem, um Hindernisse in seinem Umfeld erkennen zu können, um entsprechend adäquat darauf reagieren zu können.

Insbesondere werden Kommunikationssysteme benötigt, damit das Kraftfahrzeug mit einer Infrastruktur des Parkplatzes kommunizieren kann. Zum Beispiel ist vorgesehen, dass über die Kommunikationssysteme dem Kraftfahrzeug eine digitale Karte des Parkplatzes zur Verfügung gestellt wird, basierend auf welcher das Kraftfahrzeug autonom fahren kann. Sofern also Kommunikationssysteme nicht betriebsbereit sind, kann zum Beispiel eine solche digitale Karte gerade nicht übermittelt werden, was dann dazu führen könnte, dass das Kraftfahrzeug fehlerhaft autonom innerhalb des Parkplatzes fährt. Dies kann erfindungsgemäß vermieden werden, indem geprüft wird, ob die Kommunikationssysteme einen betriebsbereiten Betriebszustand melden.

Nach einer Ausführungsform ist vorgesehen, dass bei Erfüllung der Mindestbedingung, dass die Verantwortung für das Kraftfahrzeug vom Fahrer abgegeben wurde, das Abgeben der Verantwortung elektronisch dokumentiert wird.

Dadurch wird insbesondere der technische Vorteil bewirkt, dass auch zu einem späteren Zeitpunkt nachgeprüft werden kann, ob der Fahrer wirklich die Verantwortung abgegeben hat. Dies ist insbesondere dann relevant, wenn es innerhalb des führerlosen Fahrens zu Problemen gekommen ist.

In einer Ausführungsform ist vorgesehen, dass eine oder mehrere der hier beschriebenen Verfahrensschritte elektronisch dokumentiert werden.

Dadurch wird insbesondere der technische Vorteil bewirkt, dass auch nachträglich nachvollzogen werden kann, was im Einzelnen wie abgelaufen ist.

Nach einer anderen Ausführungsform ist vorgesehen, dass das Beginnen des führerlosen Führens ein Starten des Kraftfahrzeugs umfasst, so dass das Kraftfahrzeug erst dann gestartet wird, wenn eine oder mehrere der Mindestbedingungen erfüllt sind.

Dadurch wird insbesondere der technische Vorteil bewirkt, dass eine Sicherheit für umstehende Personen noch weiter erhöht werden kann. Denn so lange ein Antriebsmotor des Kraftfahrzeugs noch nicht gestartet ist, kann das Fahrzeug auch noch nicht losfahren. Es wird damit also in vorteilhafter Weise ein unbeabsichtigtes Losfahren des Kraftfahrzeugs verhindert. Das heißt also, dass ein Starten des Kraftfahrzeugs bedeutet, dass ein Antriebsmotor des Kraftfahrzeugs gestartet, also angeschaltet, wird.

Nach einer anderen Ausführungsform ist vorgesehen, dass mit dem führerlosen Führen des Kraftfahrzeugs nur dann begonnen wird, wenn alle Mindestbedingungen erfüllt sind.

Dadurch wird insbesondere der technische Vorteil bewirkt, dass das führerlose Führen noch effizienter durchgeführt werden kann. Insbesondere wird dadurch in vorteilhafter Weise noch weiter eine Sicherheit für umstehende Personen erhöht. Allgemein wird eine Sicherheit für das Kraftfahrzeug respektive für den Parkplatz weiter erhöht.

Nach einer Ausführungsform ist vorgesehen, dass die Zielposition eine Parkposition des Parkplatzes oder eine Abholposition des Parkplatzes ist, an welcher eine Person das Kraftfahrzeug abholen kann.

Dadurch wird insbesondere der technische Vorteil bewirkt, dass ein automatischer Parkvorgang effizient durchgeführt werden kann.

Sofern die Zielposition eine Parkposition des Parkplatzes ist, ist insbesondere vorgesehen, dass die Startposition eine Abgabeposition des Parkplatzes ist. Eine Abgabeposition des Parkplatzes bezeichnet eine Position des Parkplatzes, an welcher der Fahrer sein Kraftfahrzeug für die Durchführung eines automatischen Parkvorgangs abstellen soll. Das heißt also, dass der Fahrer sein Fahrzeug an der Abgabeposition abstellt und sein Fahrzeug verlässt. Anschließend wird, wenn die Mindestbedingungen erfüllt sind, mit dem automatischen Parkvorgang begonnen. Das Kraftfahrzeug fährt dann führerlos zur Parkposition und stellt sich dort ab.

Sofern die Zielposition eine Abholposition des Parkplatzes ist, an welcher eine Person das Kraftfahrzeug abholen kann, ist insbesondere vorgesehen, dass die Startposition eine Parkposition des Parkplatzes ist. Das heißt also, dass das abgestellte Fahrzeug an der Parkposition abgestellt ist. Das heißt also, dass es sich bei dem abgestellten Kraftfahrzeug um ein parkendes Kraftfahrzeug handelt.

Nach einer Ausführungsform ist vorgesehen, dass das erfindungsgemäße Konzept auch für den Fall angewendet wird, gemäß welchem das Kraftfahrzeug von der Abgabeposition führerlos zur Parkposition geführt werden soll respektive wird und dann von der Parkposition zur Abholposition führerlos geführt werden soll respektive geführt wird. Jedes Mal wird mit dem führerlosen Führen erst dann begonnen, wenn zumindest eine der Mindestbedingungen erfüllt ist.

Die Formulierung "respektive" umfasst insbesondere die Formulierung "und/oder".

In einer Ausführungsform sind folgende Schritte vorgesehen:
- Prüfen, ob eine oder mehrere der folgenden Zusatzbedingungen erfüllt sind:
   - Kraftfahrzeug ist korrekt abgestellt,
   - Kraftfahrzeug ist verriegelt.
- Beginnen mit dem führerlosen Führen des Kraftfahrzeugs nur dann, wenn zusätzlich zu der oder den Mindestbedingungen eine oder mehrere der Zusatzbedingungen erfüllt sind.

Dadurch wird insbesondere der technische Vorteil bewirkt, dass effizient sichergestellt werden kann, dass das Kraftfahrzeug bereit für das führerlose Führen ist.

Das Prüfen, ob das Kraftfahrzeug korrekt abgestellt ist, umfasst insbesondere ein Prüfen, ob das Kraftfahrzeug ausgeschaltet ist (, also insbesondere ob ein Antriebsmotor des Kraftfahrzeugs ausgeschaltet ist,) und/oder ob ein Gang eingelegt ist und/oder ob eine Parkbremse aktiviert ist, also zum Beispiel angezogen ist.

Die Erfindung wird im Folgenden anhand von bevorzugten Ausführungsbeispielen näher erläutert. Hierbei zeigen
Fig. 1 ein Ablaufdiagramm eines Verfahrens zum führerlosen Führen eines an einer Startposition eines Parkplatzes abgestellten Kraftfahrzeugs von der Startposition zu einer Zielposition des Parkplatzes und
Fig. 2 eine Vorrichtung zum führerlosen Führen eines an einer Startposition eines Parkplatzes abgestellten Kraftfahrzeugs von der Startposition zu einer Zielposition des Parkplatzes.

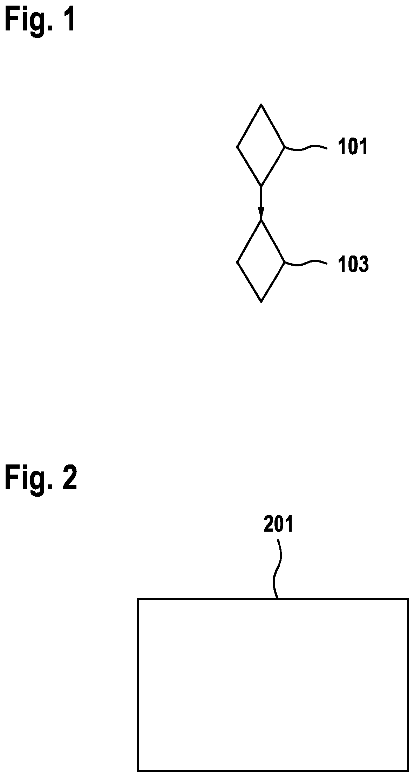

Fig. 1 zeigt ein Ablaufdiagramm eines Verfahrens zum führerlosen Führen eines an einer Startposition eines Parkplatzes abgestellten Kraftfahrzeugs von der Startposition zu einer Zielposition des Parkplatzes.

Das Verfahren umfasst die folgenden Schritte
- Prüfen 101, ob eine oder mehrere der folgenden Mindestbedingungen erfüllt sind:
   - Auftrag für das führerlose Führen liegt vor,
   - Verantwortung für das abgestellte Kraftfahrzeug ist vom Fahrer des abgestellten Kraftfahrzeugs abgegeben,
   - Mindestabstand von einer oder mehrerer Personen zum abgestellten Kraftfahrzeug ist eingehalten,
- Beginnen 103 mit dem führerlosen Führen des Kraftfahrzeugs nur dann, wenn eine oder mehrere der Mindestbedingungen erfüllt sind.

Das Prüfen, ob der Mindestabstand eingehalten ist, umfasst erfindungsgemäß, dass mittels eines Umfeldsensorsystems des Parkplatzes eine Umfelderfassung durchgeführt wird. Das heißt also, dass das Umfeldsensorsystem das Kraftfahrzeug und seine Umgebung erfasst. Basierend auf dieser Erfassung wird bestimmt, ob sich eine oder mehrere Personen im Umfeld befinden. Basierend darauf wird ein Abstand zwischen dem Kraftfahrzeug und der oder den mehreren Personen ermittelt, wobei dann dieser ermittelte Abstand mit einem Mindestabstand verglichen wird, um zu prüfen, ob der Mindestabstand eingehalten ist.

Analog kann, was nicht Teil der Erfindung ist, das Prüfen, ob der Mindestabstand eingehalten ist, anstelle oder zusätzlich mittels eines Umfeldsensorsystems das Kraftfahrzeug selbst durchgeführt werden. Das heißt also, dass das Kraftfahrzeug zum Beispiel nur dann sich startet, wenn es mittels seines Umfeldsensorsystems festgestellt hat, dass Personen in seinem Umfeld zum Kraftfahrzeug einen Mindestabstand einhalten, was nicht Teil der Erfindung ist.

Erfindungsgemäß ist vorgesehen, dass das Prüfen, ob der Mindestabstand eingehalten ist, mittels eines fahrzeugexternen Parkplatzverwaltungsservers des Parkplatzes durchgeführt wird. Der Parkplatzverwaltungsserver wertet hierfür das mittels des Umfeldsensorsystems des Parkplatzes erfasste Umfeld aus.

Das Prüfen, ob ein Auftrag für das führerlose Führen vorliegt, umfasst insbesondere, dass eine Anfrage an einen Parkplatzverwaltungsserver des Parkplatzes durchgeführt wird, ob für das Kraftfahrzeug eine Reservierung für eine Parkposition vorliegt respektive, ob das Kraftfahrzeug für einen automatischen Parkvorgang angemeldet ist. Sofern eine Reservierung oder eine Anmeldung vorliegen, so ist dann insbesondere vorgesehen, dass mit dem führerlosen Führen begonnen wird.

Das Beginnen gemäß dem Schritt 103 umfasst zum Beispiel, dass ein Startbefehl über ein Kommunikationsnetzwerk an das Kommunikationssystem des Kraftfahrzeugs gesendet wird, ansprechend auf welchen das Kraftfahrzeug starten kann respektive startet.

Ein Kommunikationsnetzwerk umfasst insbesondere ein Mobilfunk- und/oder WLAN-Netzwerk und/oder LoRa-Kommunikationsnetzwerk. Hierbei steht "LoRa" für "Low-Power Wide-Range Communication".

Personen im Umfeld des Kraftfahrzeugs sind erfindungsgemäss ehemalige Fahrzeuginsassen respektive der ehemalige Fahrer des Kraftfahrzeugs.

Fig. 2 zeigt eine Vorrichtung 201 zum führerlosen Führen eines an einer Startposition eines Parkplatzes abgestellten Kraftfahrzeugs von einer Startposition zu einer Zielposition des Parkplatzes.

Die Vorrichtung 201 ist ausgebildet, das Verfahren zum führerlosen Führen eines an einer Startposition eines Parkplatzes abgestellten Kraftfahrzeugs von der Startposition zur einer Zielposition des Parkplatzes aus- oder durchzuführen. Die Vorrichtung 201 umfasst zum Beispiel ein Umfeldsensorsystem und ein Kommunikationssystem. Mittels des Umfeldsensorsystems ist eine Umfelderfassung, wie vorstehend beschrieben, des Umfelds des Kraftfahrzeugs vorgesehen. Mittels des Kommunikationssystems ist zum Beispiel vorgesehen, dass ein Startbefehl zum Starten des Kraftfahrzeugs über ein Kommunikationsnetzwerk an das Kraftfahrzeug gesendet wird.

Nach einer Ausführungsform ist ein Parkplatz vorgesehen, der die Vorrichtung 201 umfasst.

Nach einer Ausführungsform, welche nicht Teil der Erfindung ist, ist ein Kraftfahrzeug vorgesehen, das die Vorrichtung 201 umfasst.

Die Erfindung umfasst also insbesondere und unter anderem den Gedanken, ein technisches Konzept bereitzustellen, welches einen sicheren Start eines Kraftfahrzeugs zur Durchführung eines automaischen Parkvorgangs sicherstellen kann. Dies beginnend ab der Startposition, die zum Beispiel eine Abgabeposition ist, wobei die Abgabeposition auch als eine Dropzone bezeichnet werden kann. Ein Kraftfahrzeug, welches führerlos innerhalb eines Parkplatzes fahren kann und automatisch ein- respektive ausparken kann, kann als ein AVP-Kraftfahrzeug bezeichnet werden.

Der erfindungsgemäße Grundgedanke ist insbesondere darin zu sehen, dass verschiedene Mindestkriterien (Mindestbedingungen) geprüft werden, ob diese erfüllt sind. Dies bevor mit dem führerlosen Führen des Kraftfahrzeugs begonnen wird, also insbesondere bevor das Kraftfahrzeug gestartet wird.

Die Mindestkriterien oder Mindestbedingungen umfassen eine oder mehrere der folgenden Bedingungen:
Der Fahrer hat den Prozess (das führerlose Führen oder den automatischen Parkvorgang) beauftragt.

Die Verantwortung für das Kraftfahrzeug ist nachvollziehbar vom Fahrer an ein AVP-System übergegangen.

Der ehemalige Fahrer respektive die ehemaligen Fahrzeuginsassen haben einen definierten Mindestabstand, der zum Beispiel einstellbar ist, vom Kraftfahrzeug. Der Mindestabstand beträgt zum Beispiel 2 m.

Nach einer Ausführungsform muss eine definierte, insbesondere einstellbare, Mindestzeit seit der Erfüllung eines oder mehrerer der vorstehend genannten Mindestkriterien oder Mindestbedingungen vergangen sein (Zeit nach dem Ende des Prüfens). Die Mindestzeit beträgt zum Beispiel 10 s.

Nach einer Ausführungsform melden AVP-Systeme ein "ok". Das heißt also, dass ein oder mehrere Systeme zur Durchführung des führerlosen Führens einen betriebsbereiten Betriebszustand melden müssen, damit mit dem führerlosen Führen des Kraftfahrzeugs begonnen wird.

Nach einer Ausführungsform müssen mindestens kraftfahrzeuginterne Systeme und Systeme einer Parkplatzinfrastruktur jeweils einen betriebsbereiten Betriebszustand melden, damit mit dem führerlosen Führen begonnen wird.

Nach einer Ausführungsform wird die Übergabe der Verantwortung elektronisch dokumentiert.

Nach der Erfüllung der Mindestbedingung oder der Mindestbedingungen werden der Prozess für den Start und der Start für die führerlose Fahrt gestartet.

## Patentansprüche

1. Computerimplementiertes Verfahren zum führerlosen Führen eines an einer Startposition eines Parkplatzes abgestellten Kraftfahrzeugs von der Startposition zu einer Zielposition des Parkplatzes, umfassend die folgenden Schritte:
- Prüfen (101), ob eine oder mehrere der folgenden Mindestbedingungen erfüllt sind:
• Auftrag für das führerlose Führen liegt vor,
• Verantwortung für das abgestellte Kraftfahrzeug ist vom Fahrer des abgestellten Kraftfahrzeugs abgegeben,
• Mindestabstand von einer oder mehrerer Personen zum abgestellten Kraftfahrzeug ist eingehalten,
- Beginnen (103) mit dem führerlosen Führen des Kraftfahrzeugs nur dann, wenn eine oder mehrere der Mindestbedingungen erfüllt sind,
- wobei das Prüfen, ob der Mindestabstand eingehalten ist, umfasst, dass mittels eines Umfeldsensorsystems des Parkplatzes eine Umfelderfassung durchgeführt wird, so dass das Umfeldsensorsystem das Kraftfahrzeug und seine Umgebung erfasst,
- wobei basierend auf dieser Erfassung bestimmt wird, ob sich eine oder mehrere Personen im Umfeld befinden,
- wobei basierend darauf ein Abstand zwischen dem Kraftfahrzeug und der oder den mehreren Personen ermittelt wird,
- wobei dann dieser ermittelte Abstand mit einem Mindestabstand verglichen wird, um zu prüfen, ob der Mindestabstand eingehalten ist,
- so dass das Prüfen, ob der Mindestabstand eingehalten ist, mittels eines fahrzeugexternen Parkplatzverwaltungsservers des Parkplatzes durchgeführt wird, wobei der Parkplatzverwaltungsserver hierfür das mittels des Umfeldsensorsystems des Parkplatzes erfasste Umfeld auswertet,
- wobei, wenn eine oder mehrere der Mindestbedingungen erfüllt sind, eine Zeit nach einem Ende des Prüfens gemessen wird, die mit einer vorbestimmten Mindestzeit verglichen wird, wobei mit dem führerlosen Führen des Kraftfahrzeugs nur dann begonnen wird, wenn die gemessene Zeit gleich oder größer gleich der vorbestimmten Mindestzeit ist, wobei nach Ablauf der vorbestimmten Mindestzeit eine oder mehrere der Mindestbedingungen überprüft werden, ob diese erfüllt sind, wobei nur bei Erfüllung mit dem führerlosen Führen begonnen wird.

2. Verfahren nach Anspruch 1, wobei geprüft wird, ob ein oder mehrere Systeme zur Durchführung des führerlosen Führens einen betriebsbereiten Betriebszustand melden, wobei mit dem führerlosen Führen des Kraftfahrzeugs nur dann begonnen wird, wenn das eine oder die mehreren Systeme einen betriebsbereiten Betriebszustand melden.

3. Verfahren nach Anspruch 2, wobei das eine oder die mehreren Systeme ein oder mehrere Elemente ausgewählt aus der folgende Gruppe von Systemen umfassen: Antriebssystem des Kraftfahrzeugs, Bremssystem des Kraftfahrzeugs, Lenkungssystem des Kraftfahrzeugs, Kommunikationssystem des Kraftfahrzeugs, Umfeldsensorsystem des Kraftfahrzeugs, Parkassistenzsystem des Kraftfahrzeugs, autonomes Führungssystem des Kraftfahrzeugs, Kommunikationssystem des Parkplatzes, Umfeldsensorsystem des Parkplatzes, Steuerungssystem des Parkplatzes zum Steuern des führerlosen Führens, Fernsteuerungssystem des Parkplatzes zum Fernsteuern des Kraftfahrzeugs.

4. Verfahren nach einem der vorherigen Ansprüche, wobei bei Erfüllung der Mindestbedingung, dass die Verantwortung für das Kraftfahrzeug vom Fahrer abgegeben wurde, das Abgeben der Verantwortung elektronisch dokumentiert wird.

5. Verfahren nach einem der vorherigen Ansprüche, wobei das Beginnen des führerlosen Führens ein Starten des Kraftfahrzeugs umfasst, so dass das Kraftfahrzeug erst dann gestartet wird, wenn eine oder mehrere der Mindestbedingungen erfüllt sind.

6. Verfahren nach einem der vorherigen Ansprüche, wobei mit dem führerlosen Führen des Kraftfahrzeugs nur dann begonnen wird, wenn alle Mindestbedingungen erfüllt sind.

7. Verfahren nach einem der vorherigen Ansprüche, wobei die Zielposition eine Parkposition des Parkplatzes oder eine Abholposition des Parkplatzes ist, an welcher eine Person das Kraftfahrzeug abholen kann.

8. Verfahren nach einem der vorherigen Ansprüche, umfassend die folgenden Schritte:
- Prüfen, ob eine oder mehrere der folgenden Zusatzbedingungen erfüllt sind:
• Kraftfahrzeug ist korrekt abgestellt,
• Kraftfahrzeug ist verriegelt.
- Beginnen mit dem führerlosen Führen des Kraftfahrzeugs nur dann, wenn zusätzlich zu der oder den Mindestbedingungen eine oder mehrere der Zusatzbedingungen erfüllt sind.

9. Vorrichtung (201) zum führerlosen Führen eines an einer Startposition eines Parkplatzes abgestellten Kraftfahrzeugs von der Startposition zu einer Zielposition des Parkplatzes, wobei die Vorrichtung ausgebildet ist, das Verfahren nach einem der vorherigen Ansprüche durchzuführen.

10. Computerprogramm, umfassend Programmcode zur Durchführung des Verfahrens nach einem der Ansprüche 1 bis 8, wenn das Computerprogramm auf einem Computer ausgeführt wird.

## Claims

1. Computer-implemented method for the driverless driving of a motor vehicle parked in a starting position of a parking lot from the starting position to a target position of the parking lot, comprising the following steps:
- checking (101) whether one or more of the following minimum conditions are met:
• a driverless driving task is present,
• responsibility for the parked motor vehicle has been ceded by the driver of the parked motor vehicle,
• minimum distance between one or more people and the parked motor vehicle is complied with,
- beginning (103) the driverless driving of the motor vehicle only when one or more of the minimum conditions are met,
- wherein the check as to whether the minimum distance is complied with comprises a surroundings sensor system of the parking lot detecting the surroundings, such that the surroundings sensor system detects the motor vehicle and its surroundings,
- wherein, based on this detection, it is determined whether one or more people are located in the surroundings,
- wherein a distance between the motor vehicle and the one or more people is ascertained on the basis thereof,
- wherein this ascertained distance is then compared with a minimum distance in order to check whether the minimum distance is complied with,
- such that the check as to whether the minimum distance is complied with is performed by way of a parking lot management server of the parking lot external to the vehicle, wherein the parking lot management server, for this purpose, evaluates the surroundings detected by way of the surroundings sensor system of the parking lot,
- wherein, when one or more of the minimum conditions are met, a time following an end of the check is measured and compared with a predetermined minimum time, wherein the driverless driving of the motor vehicle is begun only when the measured time is equal to or greater than or equal to the predetermined minimum time, wherein, after the predetermined minimum time has elapsed, one or more of the minimum conditions are checked as to whether they are met, wherein the driverless driving is begun only when they are met.

2. Method according to Claim 1, wherein it is checked whether one or more systems for performing the driverless driving report an operationally ready operating state, wherein the driverless driving of the motor vehicle is begun only when the one or more systems report an operationally ready operating state.

3. Method according to Claim 2, wherein the one or more systems comprise one or more elements selected from the following group of systems: drive system of the motor vehicle, braking system of the motor vehicle, steering system of the motor vehicle, communication system of the motor vehicle, surroundings sensor system of the motor vehicle, parking assistance system of the motor vehicle, autonomous driving system of the motor vehicle, communication system of the parking lot, surroundings sensor system of the parking lot, control system of the parking lot for controlling the driverless driving, remote control system of the parking lot for remotely controlling the motor vehicle.

4. Method according to one of the preceding claims, wherein, when the minimum condition whereby responsibility for the motor vehicle has been ceded by the driver is met, the ceding of responsibility is documented electronically.

5. Method according to one of the preceding claims, wherein beginning the driverless driving comprises starting the motor vehicle such that the motor vehicle is started only when one or more of the minimum conditions are met.

6. Method according to one of the preceding claims, wherein the driverless driving of the motor vehicle is begun only when all of the minimum conditions are met.

7. Method according to one of the preceding claims, wherein the target position is a parking position in the parking lot or a collection position in the parking lot at which a person is able to collect the motor vehicle.

8. Method according to one of the preceding claims, comprising the following steps:
- checking whether one or more of the following additional conditions are met:
• motor vehicle is parked correctly,
• motor vehicle is locked,
- beginning the driverless driving of the motor vehicle only when one or more of the additional conditions are met in addition to the one or more minimum conditions.

9. Device (201) for the driverless driving of a motor vehicle parked in a starting position of a parking lot from the starting position to a target position of the parking lot, wherein the device is designed to perform the method according to one of the preceding claims.

10. Computer program comprising program code for performing the method according to one of Claims 1 to 8 when the computer program is executed on a computer.

## Revendications

1. Procédé informatisé de guidage sans conducteur d'un véhicule automobile, stationné à une position de départ d'un parking, depuis la position de départ jusqu'à une position cible du parking, ledit procédé comprenant les étapes suivantes :
- vérifier (101) si une ou plusieurs des conditions minimales suivantes sont remplies :
• il existe une commande de guidage sans conducteur,
• la prise en charge du véhicule en stationnement est cédée par le conducteur du véhicule en stationnement,
• la distance minimale entre une ou plusieurs personnes et le véhicule en stationnement est respectée,
- commencer (103) à effectuer le guidage sans conducteur du véhicule automobile seulement si une ou plusieurs des conditions minimales sont remplies,
- la vérification du respect de la distance minimale comprenant une détection de l'environnement au moyen d'un système de capteurs d'environnement du parking afin que le système de capteurs d'environnement détecte le véhicule automobile et son environnement,
- une détermination de la proximité d'une ou plusieurs personnes est effectuée sur la base de cette détection,
- une distance entre le véhicule automobile et la ou les personnes est déterminée sur cette base,
- cette distance déterminée est ensuite comparée à une distance minimale afin de vérifier si la distance minimale est respectée,
- de sorte que la vérification du respect de la distance minimale est effectuée au moyen d'un serveur de gestion de parking, extérieur au véhicule, du parking, le serveur de gestion de parking évaluant pour cela l'environnement détecté au moyen du système de capteurs d'environnement du parking,
- si une ou plusieurs des conditions minimales sont remplies, un temps après la fin de la vérification étant mesuré qui est comparé à un temps minimum prédéterminé, le guidage sans conducteur du véhicule automobile n'étant démarré que si le temps mesuré est égal ou supérieur ou égal au temps minimal prédéterminé, une ou plusieurs des conditions minimales étant vérifiées une fois le temps minimal prédéterminé écoulé pour savoir si celles-ci sont remplies, le guidage sans conducteur ne commençant que si celles-ci sont remplies.

2. Procédé selon la revendication 1, **caractérisé en ce qu'**il est vérifié si un ou plusieurs systèmes de guidage sans conducteur signalent un état de fonctionnement prêt à fonctionner, le guidage sans conducteur du véhicule automobile commençant seulement lorsqu'un système ou les plusieurs systèmes signalent un état de fonctionnement prêt à fonctionner.

3. Procédé selon la revendication 2, le système ou les plusieurs systèmes comprenant un ou plusieurs éléments choisis dans le groupe de systèmes suivant : système d'entraînement du véhicule automobile, système de freinage du véhicule automobile, système de direction du véhicule automobile, système de communication du véhicule automobile, système de capteurs d'environnement du véhicule automobile, système d'aide au stationnement du véhicule automobile, système de guidage autonome du véhicule automobile, système de communication du parking, système de capteurs d'environnement du parking, système de commande du parking destiné à commander le guidage sans conducteur, système de commande à distance du parking destiné à commander à distance le véhicule automobile.

4. Procédé selon l'une des revendications précédentes, lorsque la condition minimale selon laquelle le conducteur a cédé la prise en charge du véhicule automobile est remplie, la cession de la prise en charge est documentée électroniquement.

5. Procédé selon l'une quelconque des revendications précédentes, le lancement du guidage autonome comprenant le démarrage du véhicule automobile de sorte que le véhicule automobile ne démarre que lorsqu'une ou plusieurs des conditions minimales sont remplies.

6. Procédé selon l'une des revendications précédentes, le guidage sans conducteur du véhicule automobile n'est démarré que lorsque toutes les conditions minimales sont remplies.

7. Procédé selon l'une des revendications précédentes, la position cible étant une position de stationnement du parking ou une position de récupération du parking, à laquelle une personne peut récupérer le véhicule automobile.

8. Procédé selon l'une des revendications précédentes, ledit procédé comprenant les étapes suivantes :
- vérifier si une ou plusieurs des conditions supplémentaires suivantes sont remplies :
• le véhicule est stationné correctement,
• le véhicule est verrouillé.
- commencer le guidage sans conducteur du véhicule automobile seulement si une ou plusieurs des conditions supplémentaires sont remplies en plus de la condition minimale ou des conditions minimales.

9. Dispositif (201) de guidage sans conducteur d'un véhicule automobile, stationné à une position de départ d'un parking, depuis la position de départ jusqu'à une position cible du parking, le dispositif étant conçu pour mettre en œuvre le procédé selon l'une des revendications précédentes.

10. Logiciel, comprenant un code de programme destiné à mettre en œuvre le procédé selon l'une des revendications 1 à 8, lorsque le logiciel est exécuté sur un ordinateur.
